# EUROPEAN PATENT SPECIFICATION

(11) **EP 2 327 576 B1**
(45) Date of publication and mention of the grant of the patent: **13.01.2016**
(21) Application number: 09809680.3
(22) Date of filing: 23.06.2009
(51) Int. Cl.: B60J 7/00, B60J 1/00, B60J 3/00, B62D 25/06

(54) **AUTOMOBILE ROOF STRUCTURE**
DACHSTRUKTUR FÜR EIN AUTOMOBIL
STRUCTURE DE TOIT AUTOMOBILE

(30) Priority: 29.08.2008 JP 2008221352
(43) Date of publication of application: 01.06.2011
(73) Proprietor: Toyota Shatai Kabushiki Kaisha, Kariya-shi Aichi 448-0002 (JP); Kabushiki Kaisha Toyota Jidoshokki, Kariya-shi, Aichi 448-8671 (JP)
(72) Inventor: KAMEI Masayuki, Kariya-shi Aichi 448-0002 (JP); YOSHITA Yusuke, Kariya-shi Aichi 448-0002 (JP); MATSUDA Yukio, Toyota-shi Aichi 471-8571 (JP); TERAI Hideaki, Kariya-shi Aichi 448-8671 (JP); INABA Hirotaka, Kariya-shi Aichi 448-8671 (JP)
(74) Representative: Dempster, Benjamin John Naftel
(86) International application number: PCT/JP2009/061380
(87) International publication number: WO 2010/024025

(56) References cited:
- EP-A1- 1 495 888
- JP-A- 58 004 627
- JP-A- 2002 104 240
- JP-A- 2003 182 369
- JP-A- 2007 230 408
- US-A- 5 005 899

## Description

### TECHNICAL FIELD

The present invention relates to a vehicle roof structure. More particularly, the present invention relates to a daylighting vehicle roof structure having a roof opening covered with a panorama roof panel that is made of an unframed transparent plate.

### BACKGROUND ART

Conventionally, in a daylighting vehicle roof structure, a framed transparent plate, e.g., a framed glass, is fitted in a roof opening. In general, in the vehicle roof structure thus constructed, reinforcement portions are integrally provided to inside of a frame along right and left directions thereof, so that a side impact load given by a side collision can be transmitted therealong. Thus, a vehicle body may have an increased rigidity.

Conventionally, in another daylighting vehicle roof structure, an unframed transparent plate is disposed on a periphery of a roof opening in terms of weight reduction or other such purposes. Even in the vehicle roof structure thus constructed, reinforcement members are provided, so that a load generated when an impact is laterally applied can be transmitted therealong. For example, Patent Document 1 described below discloses a vehicle roof structure in which an opening formed in a roof panel is covered by an unframed permeable panel (sunroof panel) made of glass or synthetic resin, so as to permit daylighting. In the vehicle roof structure described in Patent Document 1, the sunroof panel is formed as an unframed panel. However, roof reinforcement members each having a hat-shape in cross section are positioned in front and rear portions of the opening of the roof panel and are bridged between right and left roof side rails, so that the load caused by the laterally applied impact can be transmitted therealong. As a result, a vehicle body may have an increased rigidity. Further, the vehicle roof structure described in Patent Document 1 has a sunshade device that can shield the sun by pulling out a retractable shade member made of a sun shield fabric. The sunshade device is formed as a module in which component members such as the shade member, a retractor and the like are attached to an upper surface of a guide member constructed of a permeable synthetic resin panel. In addition, the modularized sunshade device is threadably connected to a flange portion and the roof reinforcement members positioned around the opening of the sunroof panel via attaching holes that are formed in a circumference of the guide member, so as to be disposed on a vehicle interior side of the sunroof panel.

Further, Patent Document 2 discloses a vehicle roof structure having a movable panel that is made of an unframed transparent plate and is capable being opened and closed, and in which rigidity thereof against a side impact load is increased. In the vehicle roof structure described in Patent Document 2, a frame member that is elongated in right and left directions is fixedly connected to a vehicle interior side surface of the movable panel. The frame member is can move back and forth integrally with the movable panel. While the frame member can move integrally with the movable panel, the frame member can engage roof rails at an open position and a closed position of the movable panel, so that the side impact load can be transmitted therealong.

As described above, it is conventionally known that even when the unframed transparent plate is used, the rigidity against the side impact load can be increased by additionally providing the reinforcement members that are laterally bridged in the right and left directions.

### PRIOR ART DOCUMNET

### PATENT DOCUMENT

Patent Document 1: Japanese Laid-Open Patent Publication No. 2007-131208
Patent Document 2: Japanese Laid-Open Patent Publication No. 2003-39955 US-A-5005899 discloses a vehicle panoramic sun roof having an internal pull-out sun shade having the features of the pre-characterizing portion of claim 1 appended hereto.
EP-A-1495888 discloses a similar panoramic roof with internal pull-out sun shade.

### DISCLOSURE OF THE INVENTION

### PROBLEM TO BE SOLVED BY THE INVENTION

It is advantageous to use an unframed transparent plate is used in a daylighting vehicle roof structure in terms of vehicle weight reduction. However, in such a case, it is necessary to additionally provide reinforcement members in order to increase rigidity against a side impact load. In addition, a sunshade is provided in consideration of comfort in a vehicle cabin and the like. As a result, it is difficult to perform the weight reduction.

Therefore, it is an object of the invention to provide a daylighting vehicle roof structure in which a roof opening is covered by a panorama roof panel made of an unframed transparent plate and in which a sunshade can be provided without increasing a weight while rigidity against a side impact load is maintained.

### MEANS FOR SOLVING THE PROBLEM

In order to solve the above-mentioned problem, a vehicle roof structure according to the present invention has the following means.

According to a first aspect of the present invention, in a daylighting vehicle roof structure, a roof opening is covered by a panorama roof panel that is made of an unframed transparent plate. The roof structure includes a sun shade device that is positioned on an inner surface of the panorama roof panel. The sun shade device includes a sheet-shaped shade member that can be pulled out and retracted in back and forth directions of a vehicle, and a shade cover member that can cover the wound shade member. The shade cover member is made of an elongated rigid body and is laterally bridged in right and left directions of the vehicle along a winding axis of the shade member. The shade cover member is secured to a vehicle main body at both ends thereof.

In the vehicle roof structure, the shade cover member constituting the sun shade device is made of the rigid body and is laterally bridged in the right and left directions of the vehicle. Further, the shade cover member is secured to the vehicle main body at both ends thereof. Therefore, the shade cover member can cover the wound shade member. In addition, the shade cover member can transmit a side impact load. Therefore, rigidity against the side impact load can be maintained by the shade cover member. Thus, according to the vehicle roof structure, reinforcement members to transmit the load therealong can be omitted, so that weight reduction can be performed.

In one embodiment, the shade cover member may preferably be positioned in a portion that is overlapped with a center pillar in the back and forth directions of the vehicle.

In this case, because the side impact load applied to the center pillar is efficiently transmitted to the shade cover member, the rigidity against the side impact load can be further increased.

The panorama roof panel may preferably be made of a resin. Further, the shade cover member may preferably be suspended from the inner surface of the panorama roof surface. In this case, because the inside surface of the panorama roof panel can be supported by the shade cover member that is laterally bridged over the vehicle main body, the panorama roof made of the resin can be prevented from being easily flexed.

In this case, it is preferred that the shade cover member is secured to the vehicle main body at both ends via an attachment bracket because the shade cover member can be easily secured to the vehicle main body.

Such a vehicle roof structure can preferably be manufactured in the following manner. That is, the manufacturing method of the vehicle roof structure may include suspending the shade cover member from the inner surface of the panorama roof surface, so as to attach the shade member and the shade cover member to the panorama roof panel, adhesively securing the panorama roof panel to the vehicle main body thereafter, and connecting the attachment brackets to the both ends of the shade cover member from below, so as to connect the shade member to the vehicle main body.

According to the manufacturing method, the shade cover member is attached to the panorama roof panel that is not yet adhesively secured to the vehicle main body, so as to be incorporated thereinto. Therefore, it is possible to determine a vertical position of the shade cover member with respect to the panorama roof panel without consideration of flexure of the panorama roof panel that can be produced when it is adhesively secured to the vehicle main body. In addition, the manufacturing method may provide following advantages, for example, when the panorama roof panel is attached to the roof opening that is positioned between the center pillars. That is, in such a case, when the shade cover member should be positioned in the portion that is overlapped with the center pillar in the back and forth directions of the vehicle, the shade cover member is positioned in the middle in back and forth directions of the panorama roof panel. As a result, when the shade cover member is suspended from the inner surface of the panorama roof surface, it is advantageous in that the panorama roof panel can be prevented from being deformed (flexed). Further, two shade members that are respectively constructed to be pulled out forwardly and backwardly may be used. In such a case, in order to suspend the shade cover member from the panorama roof panel such that pulling out and retracting motion of the two shade members cannot be obstructed, the shade cover member must be suspended from the panorama roof panel within a narrow range between the two shade members. Even in such a case, the shade cover member is suspended from the panorama roof panel before the panorama roof paned is adhesively secured to the vehicle main body, so as to be incorporated thereinto. Therefore, it is advantageous in that the shade cover member can be relatively easily combined to the panorama roof panel.

### EFFECTS OF THE INVENTION

According to the present invention, it is possible to maintain rigidity against a side impact load is maintained without increasing a weight. Furthermore, when a shade cover member is disposed on a position that is overlapped with positions of center pillars in back and forth directions of an automobile, the rigidity against the side impact load can be further increased.

### BRIEF DESCRIPTION OF THE DRAWINGS

FIG. 1 is an exploded perspective view of a vehicle roof structure according to an embodiment of the invention.
FIG. 2 is a cross sectional view taken along line II-II of the vehicle roof structure shown in FIG. 1.
FIG. 3 is a perspective view of a bracket portion of the vehicle roof structure shown in FIG. 1.
FIG. 4 is a cross sectional view taken along line IV-IV of the vehicle roof structure shown in FIG. 1.

### BEST MODES FOR CARRYING OUT THE INVENTION

Hereinafter, an embodiment of the present invention will be described with reference to the drawings. Further, in each drawing, arrows Fr, L, R and Up which are shown to help understanding means forward, leftward, rightward and upward.

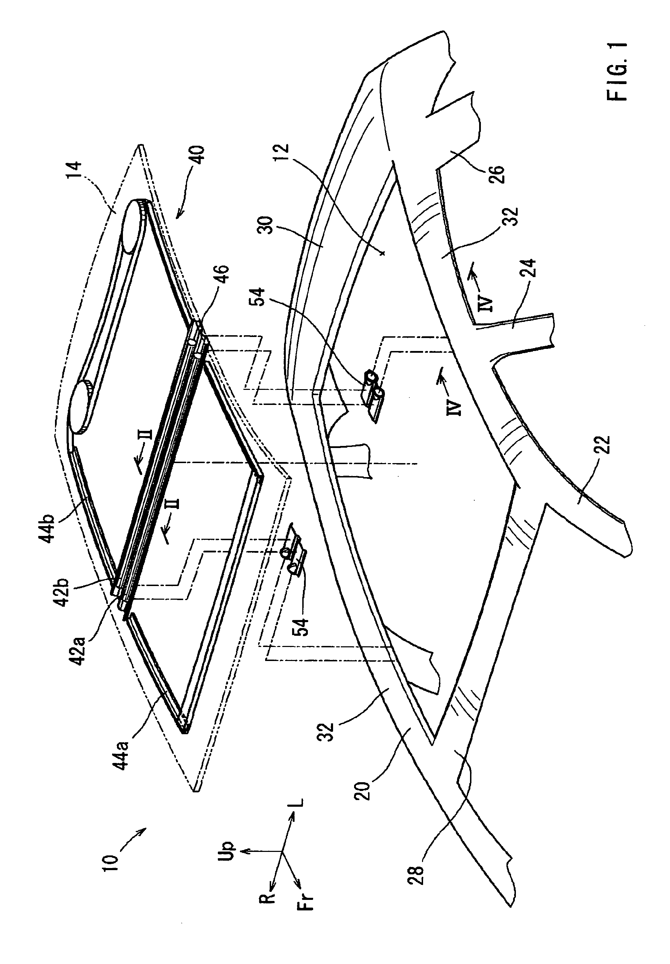

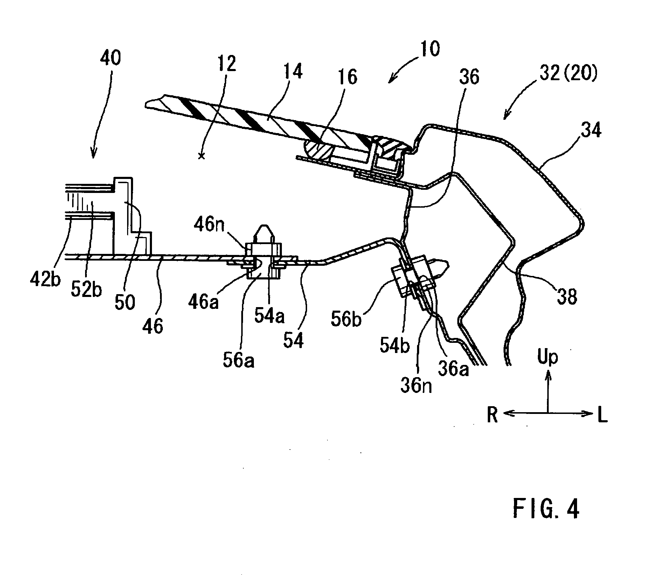

As shown in FIG. 1, a vehicle main body 20 of a vehicle having a vehicle roof structure 10 (which may be hereinafter simply referred to as a roof structure) of the present embodiment includes pillars, i.e., front pillars 22 that are positioned diagonally forwardly relative to front seats (a driver's seat and a passenger seat), center pillars 24 that are positioned between the front seats and rear seats, and rear pillars 26 that are positioned diagonally rearwardly relative to the rear seats. Further, the vehicle main body 20 includes a front header panel 28 that is bridged between the right and left front pillars 22, a rear header panel 30 that is bridged between the right and left rear pillars 26, and roof side rails 32 that is positioned in right and left sides of the vehicle so as extend along back and forth directions thereof. In the roof structure 10, a roof opening 12 is defined by the roof side rails 32 positioned in both side portions, the front header panel 28 positioned in a front portion, and the rear header panel 30 positioned in a rear portion. The roof opening 12 thus defined is covered by a panorama roof panel 14 made of a transparent plate, so as to permit daylighting. The panorama roof panel 14 is a transparent plate made of a resin such as polycarbonate or other such materials, and is formed as an unframed panel. In the roof structure 10 of the present embodiment, the whole roof opening 12 that is positioned between the center pillars 24 is covered by the panorama roof panel 14 that is formed as a single piece. The panorama roof panel 14 is adhesively secured to the vehicle main body 20 by an adhesive 16 while a peripheral edge thereof is disposed on a peripheral edge of the roof opening 12 (FIG. 4).

As shown in FIG. 1, the panorama roof panel 14 includes a sun shade device 40 that is positioned on an inner surface (a lower surface) thereof. The sun shade device 40 includes sheet-shaped sun shieldable shade members that can be pulled out and retracted, so that the sun can be shielded by pulling out the shade members along the inner surface of the panorama roof panel 14. The sun shade device 40 includes two shade members, i.e., a shade member 42a that can cover a substantially front half of the panorama roof panel 14, and a shade member 42b that can cover a substantially rear half of the panorama roof panel 14. Each of the shade members 42a and 42b is wound up in a substantially central portion in back and forth directions of the panorama roof panel 14. The shade member 42a is constructed to be pulled out forwardly along guide rails 44a, so as to cover a front side of the panorama roof panel 14. Conversely, the shade member 42b is constructed to be pulled out backwardly along guide rails 44b, so as to cover a rear side of he panorama roof panel 14. Further, because a moving mechanism for pulling out and winding up each of the shade members 42a and 42b of the sun shade device 40 has the same construction as the conventional mechanism, a detailed description of the mechanism may be omitted.

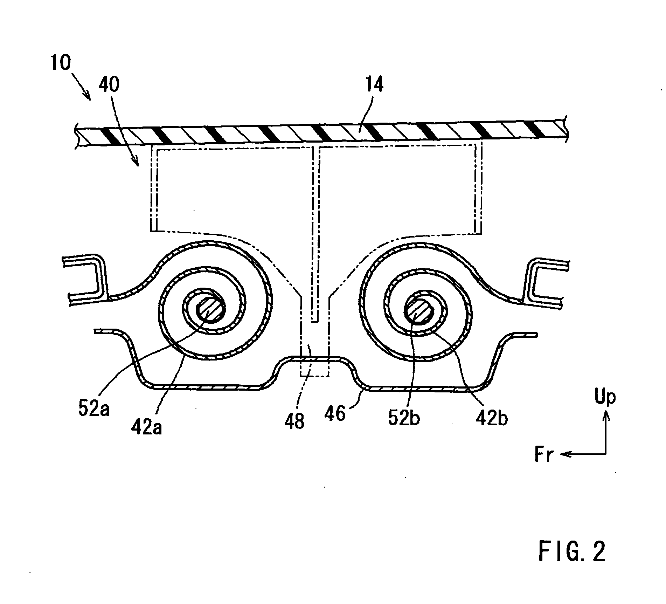

The sun shade device 40 includes a shade cover member 46 that is capable of covering the shade members 42a and 42b that are wound up. The shade cover member 46 is formed as an elongated member and is bridged in right and left directions of the vehicle main body 20. The shade cover member 46 is formed by hot pressing a steel sheet having a thickness of 2.3 mm. The shade cover member 46 has combined two inverted hat-shapes in cross section in transverse directions thereof. The two hat shaped portions of the shade cover member 46 are respectively capable of covering bottom portions of the shade members 42a and 42b that are wound up (FIG. 2). The shade cover member 46 is secured to the vehicle main body 20 at both ends, so as to have a function of transmitting a side impact load, which will be hereinafter described in detail. The shade cover member 46 is suspended from the inner surface of the panorama roof surface 14 via a folder 48, and has a pair of bearing brackets 50 that are vertically provided thereon at right and left portions thereof (FIG. 4). Winding axes 52a and 52b of the shade members 42a and 42b are supported by the bearing brackets 50.

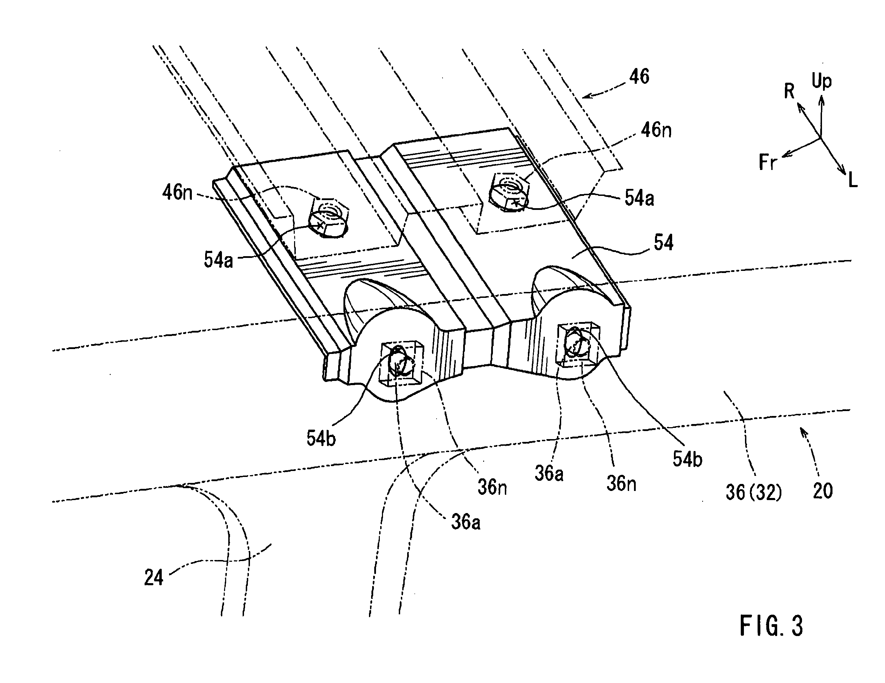

As shown in, for example, FIG. 3, the shade cover member 46 constituting the sun shade device 40 is positioned in a portion that is overlapped with the center pillars 24 in the back and forth directions of the vehicle and is secured to the roof side rails 32 at both ends via attachment brackets 54. Each of the attachment brackets 54 is made of a steel sheet. Each of the attachment brackets 54 has a recess extending in the right and left directions of the vehicle in order to increase rigidity thereof. Each of the attachment brackets 54 has through holes 54a that are formed in one end portion in right and left directions thereof, so as to be coupled to the shade cover member 46 therethrough. Each of the attachment brackets 54 is bent at the other end portion thereof and has through holes 54b that are formed in a bent portion, so as to be coupled to each of the roof side rails 32. As shown in FIG. 4, the shade cover member 46 has through holes 46a that are formed in each end portion thereof. Further, nuts 46n are welded to an upper surface of the shade cover member 46 so as to be aligned with the through holes 46a. Further, bolts 56a are inserted into the through holes 54a formed in one end of each of the attachment brackets 54 and the through holes 46a formed in each end portion of the shade cover member 46 and are screwed into the nuts 46n, so that the shade cover member 46 and the attachment brackets 54 are coupled to each other. Each of the roof side rails 32 is constructed of an outer panel 34, an inner panel 36 and a reinforcement 38 to form a closed cross-sectional structure. The inner panel 36 has through holes 36a that are formed therein. Further, nuts 36n are welded to a vehicle exterior side surface (a left L surface in FIG. 3) of the inner panel 36. Further, bolts 56b are inserted into the through holes 54b formed in the other end portion of each of the attachment brackets 54 and the through holes 36a formed in the inner panel 36 and are screwed into the nuts 36n, so that each of the attachment brackets 54 and the inner panel 36 are coupled to each other. Thus, both ends of the shade cover member 46 are secured to the right and left roof side rails 32 via the attachment brackets 54, so that the shade cover member 46 can be bridged over the vehicle main body 20.

A preferable manufacturing method of the vehicle roof structure 10 will be described. First, as shown in FIG. 1, the shade cover member 46 having the shade members 42a and 42b is connected to the inner surface of the panorama roof panel 14 via the folder 48 (FIG. 2), so as to be suspended therefrom. Thus, the sun shade device 40 can be incorporated into the panorama roof panel 14. Thereafter, the roof opening 12 is covered by the panorama roof panel 14 having the sun shade device 40. The panorama roof panel 14 is then disposed on the peripheral edge of the roof opening 12 and is adhesively secured thereto by an adhesive 16. Further, the both ends of the shade cover member 46 are secured to the roof side rails 32 via the attachment brackets 54. Thus, the vehicle roof structure 10 can be manufactured.

According to the vehicle roof structure 10 thus constructed, following effects can be obtained.

First, the shade cover member 46 constituting the sun shade device 40 can simply cover the wound shade members 42a and 42b. In addition, because the both ends of the shade cover member 46 are secured to the roof side rails 32, the shade cover member 46 can function to transmit the side impact load. Therefore, rigidity against the side impact load can be maintained. In addition, the number of parts can be reduced, so that weight reduction can be performed.

Further, in the roof structure 10, the shade cover member 46 is positioned in the portion that is overlapped with the center pillars 24 in the back and forth directions of the vehicle. Therefore, the rigidity against the side impact load can be further increased.

Further, the present invention is not limited to the embodiment described above, and the embodiment can be easily changed or modified without departing from the scope of the appended claims.

For example, in the roof structure, the roof opening can be arranged so as to not be positioned between the pillars. For example, the roof opening can be formed so as to only be positioned in a front side of the center pillars 24. In such a case, a single shade member may preferably be used and constructed to be wound up in a rear side of the roof opening. Further, the shade cover member may preferably be positioned in the portion that is overlapped with the center pillars 24.

### DESCRIPTION OF SYMBOLS

- 10: Roof Structure
- 12: Roof Opening
- 14: Panorama Roof Panel
- 16: Adhesive
- 20: Vehicle Main Body
- 24: Center Pillar
- 32: Roof Side Rail
- 36: Inner Panel
- 40: Sun Shade Device
- 42a, 42b: Shade Member
- 46: Shade Cover Member
- 52a, 52b: Winding Axis
- 54: Attachment Bracket

## Claims

1. A daylighting vehicle roof structure (10) in which a roof opening is covered by a panorama roof panel (14) that is made of an unframed transparent plate, comprising:
a sun shade device (40) that is positioned on an inner surface of the panorama roof panel,
wherein the sun shade device includes a sheet-shaped shade member (42a, 42b) that can be pulled out and retracted in back and forth directions of a vehicle, **characterized in that** there is provided a shade cover member (46) that can cover the wound shade member, wherein the shade cover member (46) is made of an elongated rigid body and is laterally bridged in right and left directions of the vehicle along a winding axis of the shade member while suspended from the inner surface of the panorama roof panel (14) via a folder (48), and wherein the shade cover member is adapted to be secured to a vehicle main body at both ends thereof.

2. The vehicle roof structure as defined in claim 1, wherein the shade cover member (46) is overlapped in use with a center pillar of the vehicle in the back and forth directions of the vehicle.

3. The vehicle roof structure as defined in claim 1 or 2, wherein the shade cover member (46) is secured to a vehicle main body at both ends via an attachment bracket (54).

4. A manufacturing method of the vehicle roof structure (10) defined in claim 3, comprising:
suspending the shade cover member (46) from the inner surface of the panorama roof panel (14), so as to attach the shade member (42a, 42b) and the shade cover member (46) to the panorama roof panel,
adhesively securing the panorama roof panel (14) to the vehicle main body thereafter, and
connecting the attachment brackets (54) to the both ends of the shade cover member (46) from below, so as to connect the shade cover member to the vehicle main body.

## Patentansprüche

1. Tageslichtbeleuchtungsfahrzeugdachstruktur (10), in der eine Dachöffnung durch eine Panoramadachplatte (14) bedeckt ist, die aus einer ungerahmten transparenten Platte hergestellt ist, wobei diese aufweist:
eine Sonnenschattenvorrichtung (40), die an einer Innenfläche der Panoramadachplatte positioniert ist,
wobei die Sonnenschattenvorrichtung ein blattförmiges Schattenglied (42a, 42b) enthält, das in Richtungen vor und zurück eines Fahrzeugs ausgefahren und eingezogen werden kann,
**dadurch gekennzeichnet, dass** ein Schattenabdeckungsglied (46), das das aufgewickelte Schattenglied abdecken kann, bereitgestellt ist, wobei das Schattenabdeckungsglied (46) aus einem länglichen steifen Körper hergestellt ist und entlang einer Aufwicklungsachse des Schattenglieds in Rechts- und Linksrichtungen des Fahrzeugs eine seitliche Brücke geschlagen hat, während es über eine Zusammenlegeinrichtung (48) von der Innenfläche der Panoramadachplatte (14) aufgehängt ist, und wobei das Schattenabdeckungsglied angepasst ist, um an einen Fahrzeughauptkörper an beiden Enden von diesem gesichert zu werden.

2. Fahrzeugdachstruktur wie in Anspruch 1 definiert, wobei sich das Schattenabdeckungsglied (46) in Benutzung mit einer Mittelsäule des Fahrzeugs in den Richtungen vor und zurück des Fahrzeugs überschneidet.

3. Fahrzeugdachstruktur wie in Anspruch 1 oder 2 definiert, wobei das Schattenabdeckungsglied (46) über eine Befestigungsklammer (54) an einem Fahrzeugaufbaukörper an beiden Enden gesichert ist.

4. Herstellungsverfahren der in Anspruch 3 definierten Fahrzeugdachstruktur (10), aufweisend:
Aufhängen des Schattenabdeckungsglieds (46) von der Innenfläche der Panoramadachplatte (14), um so das Schattenglied (42a, 42b) und das Schattenabdeckungsglied (46) an der Panoramadachplatte anzubringen,
klebendes Sichern der Panoramadachplatte (14) an den Fahrzeughauptkörper danach, und
Verbinden der Befestigungsklammern (54) mit den beiden Enden des Schattenabdeckungsglieds (46) von unten, um so das Schattenabdeckungsglied mit dem Fahrzeughauptkörper zu verbinden.

## Revendications

1. Structure de toit automobile qui laisse passer la lumière du jour (10), dans laquelle une ouverture de toit est recouverte par un panneau de toit panoramique (14) qui est composé d'une plaque transparente sans encadrement, qui comprend :
un dispositif de protection solaire (40) positionné sur une surface intérieure du panneau de toit panoramique,
dans laquelle le dispositif de protection solaire comprend un élément de protection en forme de feuille (42a, 42b) qui peut être sorti et rétracté vers l'avant et vers l'arrière d'un véhicule, **caractérisée en ce qu'**est prévu un élément d'ombrage (46) capable de recouvrir l'élément d'ombrage enroulé, l'élément d'ombrage (46) étant composé d'un corps rigide allongé et étant latéralement étendu sur la droite et sur la gauche du véhicule le long d'un axe d'enroulement de l'élément d'ombrage tout en étant suspendu à la surface intérieure du panneau de toit panoramique (14) à l'aide d'un système de pliage (48), et l'élément d'ombrage étant adapté pour être fixé sur le corps principal d'un véhicule aux deux extrémités de celui-ci.

2. Structure de toit automobile selon la revendication 1, dans laquelle l'élément d'ombrage (46) est chevauché, pendant son utilisation, par un pilier central du véhicule vers l'avant et vers l'arrière du véhicule.

3. Structure de toit automobile selon la revendication 1 ou 2, dans laquelle l'élément d'ombrage (46) est fixé sur le corps principal du véhicule, aux deux extrémités, à l'aide d'une patte de fixation (54).

4. Procédé de fabrication d'une structure de toit automobile (10) selon la revendication 3, qui comprend :
la suspension de l'élément d'ombrage (46) à la surface intérieure du panneau de toit panoramique (14), de façon à relier l'élément de protection (42a, 42b) et l'élément d'ombrage (46) au panneau de toit panoramique,
la fixation, par adhésif, du panneau de toit panoramique (14) sur le corps principal du véhicule, et
le raccordement des pattes de fixation (54) aux deux extrémités de l'élément d'ombrage (46), depuis le dessous, de façon à relier l'élément d'ombrage au corps principal du véhicule.
